# EUROPÄISCHE PATENTSCHRIFT

(11) **EP 1 417 890 B1**
(45) Veröffentlichungstag und Bekanntmachung des Hinweises auf die Patenterteilung: **11.01.2006**
(21) Anmeldenummer: 03023950.3
(22) Anmeldetag: 22.10.2003
(51) Int. Cl.: A22C 11/02

(54) **Darmdurchfädelvorrichtung**
Device for passing casings
Dispositif de mise en place de boyaux

(30) Priorität: 06.11.2002 DE 10251596
(43) Veröffentlichungstag der Anmeldung: 12.05.2004
(73) Patentinhaber: Poly-clip System GmbH & Co. KG, 60489 Frankfurt am Main (DE)
(72) Erfinder: Töpfer, Klaus, 64572 Büttelborn (DE)
(74) Vertreter: Eisenführ, Speiser & Partner

(56) Entgegenhaltungen:
- EP-A- 0 962 143
- DE-A- 2 343 103
- DE-A- 3 305 362
- US-A- 5 813 907

## Beschreibung

Die Erfindung betrifft eine Vorrichtung zum Durchziehen des Anfangs eines Vorrats an schlauchförmiger Verpackungshülle durch die Darmbremse und die in einem Gehäuse angeordnete Verschließeinrichtung einer portionierenden Abfüllmaschine für pastöses Füllgut, mit einem den Hüllenvorrat haltenden Füllrohr, an dessen Mündung die Darmbremse abziehbar angeordnet ist, und mit einer Durchziehstange für den Hüllenanfang, der in einen Klemmhaken am freien Stangenende einhängbar ist, wobei die Durchziehstange aus einer Arbeitsstellung, in der sie die Darmbremse und Verschließeinrichtung durchsetzt und in der sich der Klemmhaken nahe der Füllrohrmündung befindet, in eine Ruhestellung bewegbar ist, in der sie mit dem Klemmhaken abgeschwenkt ist.

Aus der DE 33 05 362 C2 ist eine derartige "Darmdurchfädelvorrichtung" bekannt. Dort trägt die Kolbenstange einer Hubvorrichtung, die aus einer abgeschwenkten Ruhestellung in eine zum Füllrohr koaxiale Arbeitsstellung schwenkbar ist, an ihrem freien Ende einen Greifhaken und kann durch die Verschließeinrichtung und die Darmbremse hindurch zum Füllrohr hin ausgefahren werden. Der Anfang des auf das Füllrohr ziehharmonikaartig aufgeschobenen Verpackungshüllen-Vorrats ("Darmraupe") kann dann in den Haken der Durchziehstange eingehängt, dort festgeklemmt und durch Zurückziehen der Kolbenstange durch die Darmbremse und die Verschließeinrichtung hindurchgezogen werden.

Ebenfalls mit einem Haken, der am freien Ende einer leicht gekrümmten Durchziehstange angeordnet ist, arbeitet die aus der DE 23 43 103 bekannte Durchziehvorrichtung für die Verpackungshülle. Dort ist an den Enden zweier durch mehrere Lenker verknüpfte Hebel einerseits die Darmbremse vom Füllrohr abschwenkbar und andererseits die Durchziehstange befestigt; beides wird gemeinsam bzw. wahlweise an das Füllrohr von der Seite her herangeschwenkt. Eine Verschließeinrichtung ist nicht vorgesehen.

Diese bekannten Vorrichtungen können die Anforderungen an die Geschwindigkeit und Sicherheit des Ein- und Durchführens der Anfänge von Verpackungshüllen-Vorräten durch die Darmbremse und eine anschließende Verschließeinrichtung nicht mehr befriedigen, wobei zu berücksichtigen ist, dass angesichts der hohen Geschwindigkeit moderner Abfüll- und Portionierautomaten der Wechsel des Verpackungshüllen-Vorrats auf dem Füllrohr einen beträchtlichen Nebenzeitfaktor mit entsprechendem Effizienznachteil darstellt. Der Erfindung liegt daher die Aufgabe zu Grunde, diesem Nachteil zu begegnen.

Das geschieht erfindungsgemäß - ausgehend von einer Vorrichtung des eingangs geschilderten Aufbaus - dadurch, dass die Durchziehstange teilkreisförmig gebogen und um eine durch den Kreismittelpunkt gehende sowie senkrecht zur Füllrohrachse verlaufende Achse an der Verschließeinrichtung schwenkbar ist. Diese Ausbildung macht sich den Umstand zu Nutze, dass eine einfache Drehbewegung einfacher und schneller auszuführen ist als jede Longitudinalbewegung, auch wenn sie - wie im Falle von Mehrgelenk-Konstruktionen - mit Schwenkbewegungen kombiniert ist. Weil die Darmbremse während des Einfädelvorganges (und auch schon beim Aufschieben eines neuen Hüllenvorrats auf das Füllrohr) vom Füllrohr zur Verschließeinrichtung hin abgezogen werden muss, ist der von der Durchziehstange in Richtung der Füllungs-Längsachse relativ kurz, so dass die kreisförmige Krümmung der Durchziehstange angesichts des größeren Durchlassquerschnitts unproblematisch ist. Vorzugsweise ist die Durchziehstange halbkreisförmig gebogen und über 180° schwenkbar.

Um zugleich das Aufbringen eines neuen Verpackungshüllen-Vorrats auf das Füllrohr zu erleichtern, ist bevorzugt die Anordnung so getroffen, dass die Schwenkachse der Durchziehstange seitlich gegen die Füllrohrachse versetzt und das Vorrichtungsgehäuse aus einer Arbeitsstellung, in der die Mittelachse der Verschließeinrichtung koaxial mit der Achse des Füllrohrs fluchtet, um etwa das gleiche Maß seitlich gegenüber dem Füllrohr versetzbar ist. Das kann namentlich derart geschehen, dass das Gehäuse der Verschließeinrichtung gegenüber dem Füllrohr seitlich (oder aber auch nach oben bzw. unten) derart verschwenkbar ist, dass im ausgeschwenkten Zustand die Mündung des Füllrohres gegenüber dem Gehäuse um jenes Maß versetzt ist. Dann befindet sich das freie Ende der in ihre Arbeitsstellung gedrehten Durchziehstange mit ihrem Klemmhaken vor dem Füllrohrende und damit dem Anfang des neuen Verpackungshüllen-Vorrats. Der Verpackungshüllenanfang wird in den Klemmhaken der Durchziehstange eingehängt, und beim Zurückschwenken des Gehäuses der Verschließeinrichtung in die Koaxiallage der Darmbremse und Verschließeinrichtung mit dem Füllrohr schwenkt die Durchziehstange in ihre Ruhestellung zurück und zieht dabei den Verpackungshüllenanfang durch die Darmbremse und die Verschließeinrichtung hindurch.

Zusätzliche vorteilhafte Weiterbildungen sind Gegenstand entsprechender Unteransprüche, wobei den Steuerungsmaßnahmen und der Behandlung des Verpackungshüllenanfangs nach seinem Ein- und Durchziehen durch die Darmbremse und die Verschließeinrichtung besondere Bedeutung zukommt.

Das der Zeichnung entnehmbare Ausführungsbeispiel der Erfindung wird nachstehend beschrieben. In der Zeichnung zeigt:
- Figur 1: in schematisierter Draufsicht die an einer Schiene mit deren Füllrohr anschließende Verschließvorrichtung mit der erfindungsgemäßen Darmdurchfädelvorrichtung in deren Ruhezustand während des Abfüllens;
- Figur 2: eine der Figur 1 entsprechende Darstellung beim Darmraupenwechsel und Einfädeln des Darmanfangs;

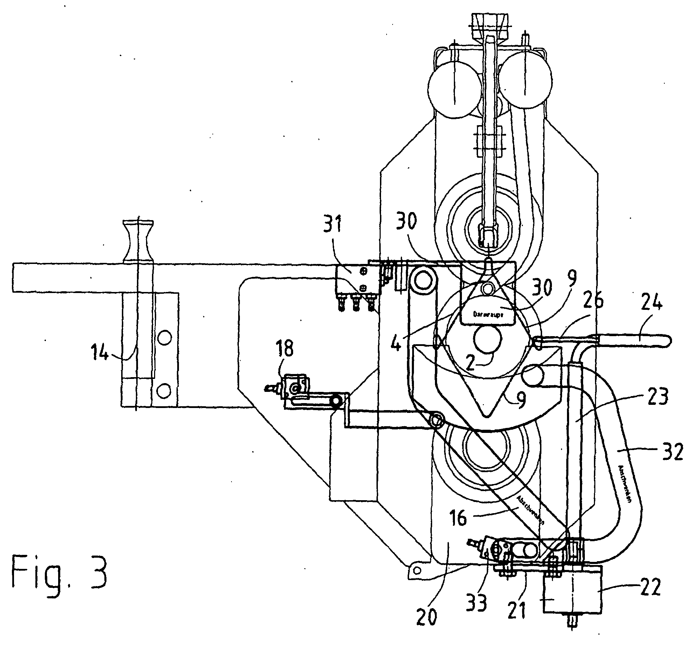

- Figur 3: eine Vorderansicht der Anordnung in Figur 1; und
- Figur 4: ein Schemadiagramm der Steuerungspneumatik.

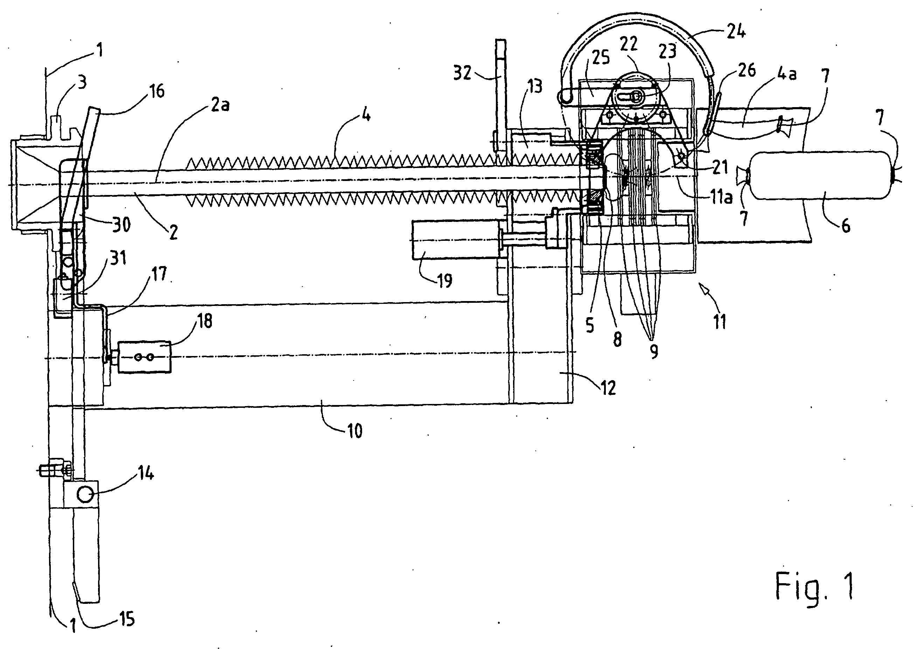

Die nur mit ihrer Frontseite 1 angedeutete Abfüllmaschine trägt in herkömmlicher Weise ein Füllrohr 2, welches mittels einer Verschraubung 3 an der Abfüllmaschine befestigt ist. Auf die Außenseite des Füllrohrs 2 ist ein Vorrat an schlauchförmigen, harmonikaartig zusammengefalteten Verpackungsmaterial in Form einer Darmraupe 4 aufgeschoben. Beim Abfüllen wird das Schlauchmaterial durch die sogenannte Darmbremse 5 hindurchgezogen, wenn die jeweilige Vorderseite verschlossen wurde und das Füllgut durch das Füllrohr hindurch in das Verpackungsmaterial (Darm) ausgestoßen wird. Ist der Füllvorgang einer Portion beendet, wird.die Portionspackung auch am anderen Ende verschlossen; Figur 1 zeigt eine derartige Portion in Form einer Wurst 6 mit Clipverschlüssen 7 an ihren beiden Enden.

Parallel zum Füllrohr 2 ist an der Frontseite 1 der Abfüllmaschine ein Arm 10 befestigt, der die im ganzen mit 11 bezeichnete Verschließeinrichtung trägt, und zwar mittels eines Querträgers 12, der auch die Halterung 13 der Darmbremse 5 mitsamt deren Betätigungseinrichtung aufnimmt, wie nachstehend näher beschrieben wird. In der Stellung gemäß Figur 1 fluchtet die Zentralachse 11a der Verschließeinrichtung 11 mit der Achse 2a des Füllrohres 2.

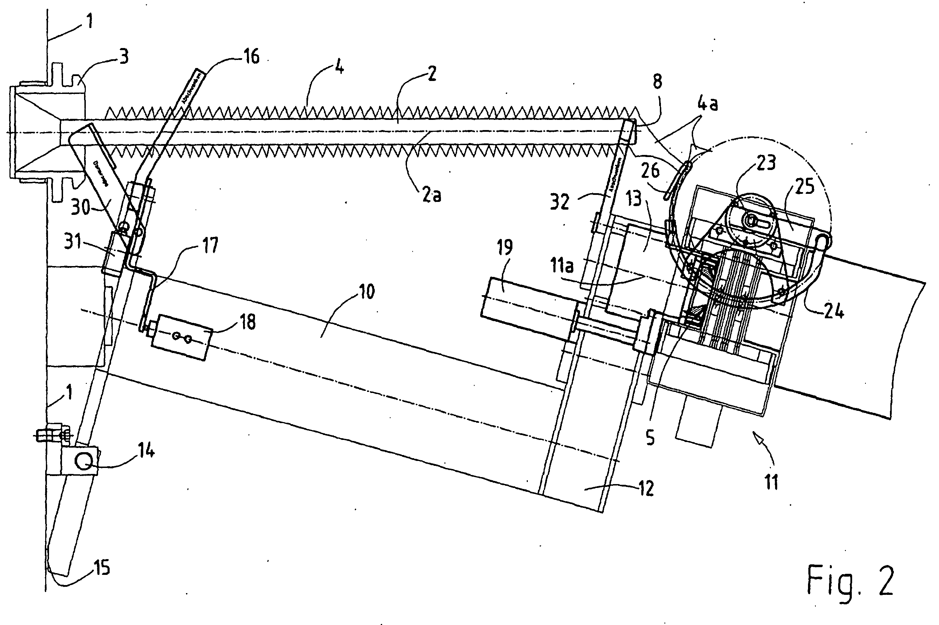

Der Arm 10 ist um die Achse 14 an der Frontseite 1 der Abfüllmaschine schwenkbar angebracht, wobei ein Anschlag 15 den Schwenkwinkel begrenzt. Auf der der Schwenkachse 14 gegenüberliegenden Seite des Armes 10 ist ein Betätigungshebel 16 angeordnet. Wird er seitwärts gedrückt, schwenkt der Arm 10 mit der daran befestigten Verschließeinrichtung 11 in die in Figur 2 dargestellte abgeschwenkte Stellung. Zugleich mit dem beim Beginn des Abschwenkens einhergehenden Entriegeln des Betätigungshebels 16 aus der in Figur 1 gezeigten Stellung wird über das Gestänge 17 ein Pneumatikventil 18 geschaltet, welches mit Hilfe des Pneumatikzylinders 19 die Darmbremse 5 von der Mündung 8 des Füllrohres 2 zu den Verdrängerblechen 9 der Verschließrichtung 11 hinschiebt; anderenfalls wäre deren Abschwenken in die Stellung gemäß Figur 2 nicht möglich.

An das Gehäuse 20 der Verschließeinrichtung 11 ist unterseitig mittels eines gegabelten Trägers 21 ein pneumatisch betätigter Schwenkzylinder 22 für die Schwenkachse 23 der im Wesentlichen halbkreisförmig gebogenen Durchziehstange 24 der Darmdurchfädelvorrichtung angeordnet. Die Durchziehstange 24 ist an ihrem einen Ende mit Hilfe eines Auslegers 25 an der den Kreismittelpunkt durchsetzenden Achse 23 befestigt, während das andere Ende zu einem Greifhaken 26 gebogen oder mit einem solchen versehen ist.

Wird nach dem Abarbeiten einer Darmraupe 4 die Verschließeinrichtung bei angezogener Darmbremse 5 aus der Abfüllstellung gemäß Figur 1 in die Darmwechselstellung gemäß Figur 2 abgeschwenkt, ein noch vorhandener Darmrest aus der Verschließeinrichtung 11 gezogen und auf das freiliegende Füllrohr 2 eine neue Darmraupe aufgeschoben, so drückt ihr maschinenseitiges Ende, wie dies in Figur 2 dargestellt ist, auf einen beim Abschwenken freigegebenen Betätigungshebel 30 eines Pneumatikventils 31, wodurch der Pneumatikzylinder 22 mit Druckluft beaufschlagt wird und die Durchziehstange 24 mit dem Haken 26 der Einfädelvorrichtung aus der Ruhestellung gemäß Figur 1 über etwa 180° um die Achse 23 in die Arbeitsstellung gemäß Figur 2 schwenkt. In dieser Lage kann der im Bereich der Mündung 8 des Füllrohrs 2 befindliche Anfang 4a der Darmraupe 4 in den Greifhaken 26 der Durchziehstange 24 eingehängt und dort verklemmt werden, wie dies Figur 2 veranschaulicht. Dabei entspricht der seitliche Versatz der Achse 23 gegen die Achse 11a etwa dem Versatz, den im ausgeschwenkten Zustand der Verliesseinrichtung die Achse 23 gegenüber der Achse 2a des Füllrohres 2 erhält, so dass sich in der in Figur 2 dargestellten Lage der Greifhaken 26 nahe der Mündung 8 des Füllrohres befindet.

Jetzt kann durch Druck auf einen weiteren, an der Verschließvorrichtung 11 angeordneten Betätigungshebel 32 das Rückschwenken des Armes 10 mit den daran befestigten Aggregaten eingeleitet werden. Dabei wird ein weiteres Pneumatikventil 33 betätigt und schwenkt die Durchziehstange 24 aus ihrer die Zentralöffnung der Verdrängerbleche 9 sowie die Darmbremse 5 durchsetzenden Stellung gemäß Figur 2 zurück in ihre Ruhestellung der Figur 1. Dabei nimmt die Durchziehstange 24 mit ihrem Greifhaken 26 den Darmanfang 4a mit und fädelt ihn durch die Darmbremse 5 und die Verschließeinrichtung 11, so dass nach Setzen des ersten Clips und Abschneiden des in den Greifhaken 26 eingeklemmten Darmanfangs 4a der Abfüllvorgang wieder beginnen und weitergeführt werden kann, nachdem die Darmbremse 5 mit Hilfe des Pneumatikzylinders 19 auf das Füllrohr 2 geschoben wurde. Gleichzeitig ist der Hebel 30 gegen die Haltemutter 3 des Füllrohres 2 gedrückt worden (Figur 1), so dass eine ungewollte Betätigung des Pneumatikventils 18 und damit des Pneumatikzylinders 22 der Einfädelvorrichtung ausgeschlossen ist.

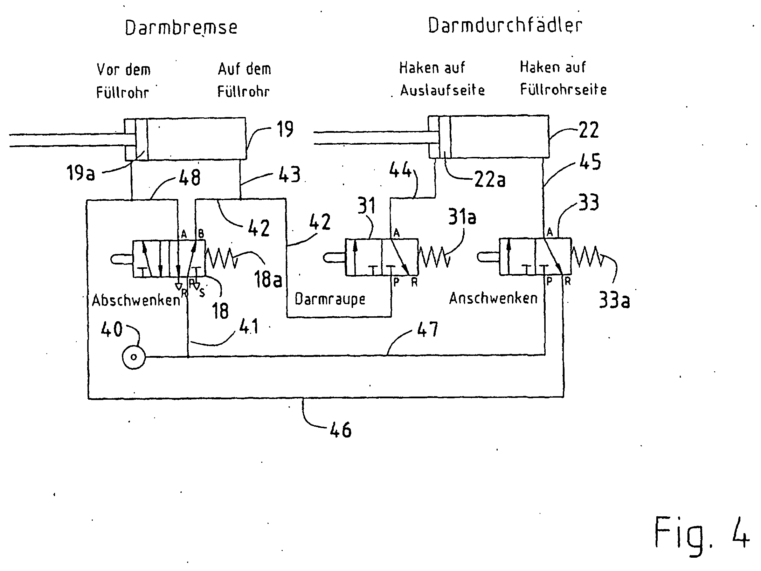

Figur 4 veranschaulicht die vorstehend beschriebne Pneumatiksteuerung anhand eines schematischen Schaltbildes. Es zeigt die Stellung der PneumatikZylinder und -Ventile nach Abschwenken des Armes 10 mit der Verschließeinrichtung 11 vor dem Aufziehen einer neuen Darmraupe 4 auf das Füllrohr 2. Vor dem Abschwenken mit Hilfe des Betätigungshebels 16 war Druckluft von der Druckluftquelle 40 über die Leitung 41 durch das Ventil 18 über die Strecke P-B und die Leitungen 42, 43 auf die rechte Seite des Kolbens 19a des Pneumatik-Zylinders 19 gegeben worden, so dass dieser in die dargestellte linke Endstellung gebracht wurde, in welcher die Darmbremse 5 vom Füllrohr 2 in die in Figur 2 gezeigte Stellung abgezogen wurde und in dieser gehalten wird. Damit steht Druckluft über die Leitung 42 auch am Pneumatik-Ventil 31 an, und wenn dieses aus der dargestellten Ruhestellung gegen die Kraft der Feder 31a nach rechts in seine Arbeitsstellung verschoben wird, weil die Darmraupe 4 auf den Betätigungshebel 30 drückt und das Ventil 31 nach rechts verschiebt, gelangt die Druckluft über die Leitung 44 auf die linke Seite des Kolbens 22a des Pneumatik-Zylinders 22. Dadurch wird die Schwenkachse 23 der Durchfädelvorrichtung gedreht und die Durchziehstange aus ihrer Ruhestellung, in der sich der Greifhaken 26 auf der Auslaufseite der Verschließeinrichtung 11 befindet, durch diese und die Darmbremse 5 hindurch in die Nähe der Mündung 8 des Füllrohres 2 geschwenkt; über die Leitung 45, den Weg A-R des Pneumatik-Ventits 33 sowie die Leitung 46 und den Weg AR des Pneumatik-Ventils 18 auf der rechten Seite des Pneumatik-Zylinders 22 wird entlüftet.

Wird im Anschluss hieran der dem Anschwenken dienende Betätigungshebel 32 gedrückt, verschiebt sich durch diesen Druck das Pneumatik-Ventil 33 aus seiner in Figur 4 dargestellten Lage nach rechts gegen die Kraft der Feder 33a. Dadurch gelangt Druckluft aus der Druckquelle 40 über die Leitung 47 und den Weg P-A des Pneumatik-Ventils 33 auf die Leitung 45 und verschiebt den Kolben 22a des Pneumatik-Zylinders 22 wieder nach links, so dass die Durchziehstange 24 der Darmdurchfädelvorrichtung in ihre Ausgangs-Ruhestellung zurückkehrt und dabei den Darmanfang 4a durch die Darmbremse 5 und die Verschließeinrichtung 11 zieht. Sobald das Anschwenken beendet und die in Figur 1 dargestellte Lage wiederhergestellt ist, wird das Pneumatik-Ventil 18 gegen die Kraft der Feder 18a in ihre in Figur 4 nicht dargestellte rechte Lage gedrückt, so dass Druckluft über die Leitung 41, den Weg P-A des Pneumatik-Ventils 18 und über die Leitung 48 auf die linke Seite des Kolbens 19a gelangt, durch dessen Verschieben nach rechts die Darmbremse auf das Füllrohr 2 zurückgeführt wird. Gleichzeitig steht die in der Leitung 48 befindliche Druckluft über die Leitung 46 und den Weg R-A des Ventils 33 auf der rechten Seite des Zylinders 22 an und verriegelt dessen Kolben 22a in seiner in Figur 4 dargestellten Stellung, in der sich der Greifhaken 26 auf der Auslaufseite der Verschließeinrichtung 11 befindet (Figur 1), weil beim Loslassen des dem Anschwenken dienenden Betätigungshebel 32 das Pneumatik-Ventil 33 durch die Kraft der Feder 33a in seine in Figur 4 dargestellte Ruhestellung zurückkehrt.

## Patentansprüche

1. Vorrichtung zum Durchziehen des Anfangs eines Vorrats an schlauchförmiger Verpackungshülle durch die Darmbremse und die in einem Gehäuse angeordnete Verschließeinrichtung einer portionierenden Abfüllmaschine für pastöses Füllgut,
mit einem den Hüllenvorrat haltenden Füllrohr, an dessen Mündung die Darmbremse abziehbar angeordnet ist,
und mit einer Durchziehstange für den Hüllenanfang, der in einen Klemmhaken am freien Stangenende einhängbar ist,
wobei die Durchziehstange aus einer Arbeitsstellung, in der sie die Darmbremse und Verschließeinrichtung durchsetzt und in der sich der Klemmhaken nahe der Füllrohrmündung befindet, in eine Ruhestellung bewegbar ist, in der sie mit dem Klemmhaken abgeschwenkt ist,
**dadurch gekennzeichnet, dass** die Durchziehstange (24) teilkreisförmig gebogen und um eine durch den Kreismittelpunkt gehende sowie senkrecht zur Füllrohrachse (2a) verlaufende Achse (23) an der Verschließeinrichtung (11) schwenkbar ist.

2. Vorrichtung nach Anspruch 1,
**dadurch gekennzeichnet, dass** die Durchziehstange (24) zumindest annähernd halbkreisförmig gebogen und über 180° schwenkbar ist.

3. Vorrichtung nach Anspruch 1 oder 2,
**dadurch gekennzeichnet, dass** die Schwenkachse (23) der Durchziehstange seitlich gegen die Füllrohrachse (2a) versetzt und die Verschließeinrichtung (11) aus einer Arbeitsstellung, in der die Mittelachse (11a) der Verschließeinrichtung (11) koaxial mit der Achse (2a) des Füllrohrs (2) fluchtet, um etwa das gleiche Maß seitlich gegenüber dem Füllrohr (2) versetzbar ist.

4. Vorrichtung nach Anspruch 3,
**dadurch gekennzeichnet, dass** das Auslösen der Versetzbewegung der Verschließvorrichtung (11) zunächst zum Abziehen der Darmbremse (5) vom Füllrohr (2) führt.

5. Vorrichtung nach Anspruch 3 oder 4,
**dadurch gekennzeichnet, dass** die Rückkehr der Durchziehstange (24) in ihre Ruhestellung mit der Rückbewegung der Verschließeinrichtung in ihre Arbeitsstellung gekoppelt ist.

## Claims

1. Device for pulling the front end of a feed of tubular casing through the casing brake and the closing device, situated in a housing, of an apportioning filling machine for paste-like filing goods
having a filling tube which contains the casing feed, the casing brake being positioned so that it can be pulled away from the orifice of the filling tube,
and having a pull-through rod for the front end of the casing which can be hung in a clamping hook on the free end of the pull-through rod,
the pull-through rod being movable from a working position, in which it passes through the casing brake and closing device and in which the clamping hook is located near the orifice of the filling tube, to an idle position in which the pull-through rod is swiveled out with the clamping hook,
**characterized in that** the pull-through rod (24) is bent in a semicircular shape and allows for swiveling on the closing device (11) about an axis (23) passing through the circular center point and running perpendicular to the filling tube axis (2a).

2. Device according to claim 1,
**characterized in that** the pull-through rod (24) is bent in at least an approximately semicircular shape and can be swiveled over a range of at least approximately 180°.

3. Device according to claim 1 or 2,
**characterized in that** the swivel axis (23) of the pull-through rod is laterally offset with respect to the filling tube axis (2a), and the closing device (11) can be laterally offset by approximately the same degree with respect to the filling tube (2) from a working position in which the center axis (11a) of the closing device (11) is coaxially aligned with the axis (2a) of the filling tube (2).

4. Device according to claim 3,
**characterized in that** actuation of the offset movement of the closing device (11) first results in the casing brake (5) being pulled away from the filling tube (2).

5. Device according to claim 3 or 4,
**characterized in that** the return of the pull-through rod (24) to its idle position is coupled with the return motion of the closing device to its working position.

## Revendications

1. Dispositif pour tirer le début d'une réserve d'une gaine d'emballage tubulaire à travers le frein à boyau et à travers l'installation de fermeture, placée dans un boîtier, d'une machine de remplissage qui débite en portions un remplissage pâteux, comportant d'une part un tube de remplissage qui maintient la réserve de gaine et à l'orifice duquel le frein à boyau peut être tiré et d'autre part une tige d'étirement pour le début de gaine, qui peut être suspendu à une griffe de blocage à l'extrémité libre de la tige, la tige d'étirement pouvant passer d'une position de travail, dans laquelle elle traverse le frein à boyau et l'installation de fermeture et dans laquelle la griffe de blocage est proche de l'orifice du tube de remplissage, à une position de repos, dans laquelle elle est basculée à l'aide de la griffe de blocage,
**caractérisé en ce que** la tige d'étirement (24) est recourbée en arc de cercle et peut pivoter sur le dispositif de fermeture (11) autour d'un axe (23) qui passe par le centre du cercle et qui s'étend perpendiculairement à l'axe du tube de remplissage (2a).

2. Dispositif selon la revendication 1, **caractérisé en ce que** la tige d'étirement (24) est recourbée au moins approximativement en demi cercle et peut pivoter de 180°.

3. Dispositif selon la revendication 1 ou 2, **caractérisé en ce que** l'axe de pivotement (23) de la tige d'étirement est déplacé latéralement vers l'axe du tube de remplissage (2a) et l'installation de fermeture (11) peut être déplacée d'environ la même proportion latéralement par rapport au tube de remplissage (2) depuis une position de travail dans laquelle l'axe central (11a) de l'installation de fermeture (11) est aligné coaxialement à l'axe (2a) du tube de remplissage (2).

4. Dispositif selon la revendication 3, **caractérisé en ce que** le déclenchement du mouvement qui déplace l'installation de fermeture (11) a d'abord pour conséquence que le frein à boyau (5) est tiré du tube de remplissage (2).

5. Dispositif selon la revendication 3 ou 4, **caractérisé en ce que** le retour de la tige d'étirement (24) dans sa position de repos est couplé au mouvement de l'installation de fermeture qui revient en position de travail.
